# EUROPEAN PATENT APPLICATION

(11) **EP 1 688 449 A1**
(43) Date of publication of application: **09.08.2006**
(21) Application number: 04799418.1
(22) Date of filing: 01.11.2004
(51) Int. Cl.: C08G 18/66, C08G 18/76, C08G 101/00

(54) **FLEXIBLE POLYURETHANE FOAM INHIBITED FROM DISCOLORING**

(30) Priority: 12.11.2003 JP 2003382727; 13.02.2004 JP 2004036497
(71) Applicant: Bridgestone Corporation, Tokyo 104-8340 (JP)
(72) Inventor: SEMBA, Yoshiyuki, Yokohama Plant, Bridgestone Co., Yokohama-shi, Kanagawa 2440812 (JP)
(74) Representative: Whalley, Kevin
(86) International application number: PCT/JP2004/016212
(87) International publication number: WO 2005/047360

(57) **Abstract**

A flexible polyurethane foam inhibited from discoloring is produced by foaming a polyurethane composition containing a polyol component and an isocyanate component. The polyol component contains two or more polyols with different molecular weights and the difference in molecular weight between one of the polyols that has the highest molecular weight and another one of the polyols that has the lowest molecular weight is 500 or more. Since the polyol component contains the high-molecular-weight polyol and the low-molecular-weight polyol, the flexible polyurethane foam has high discoloration resistance although the flexible polyurethane foam contains no antioxidant or ultraviolet absorber and is produced without using any aliphatic or aromatic isocyanate which is expensive and which causes a decrease in detergent resistance and/or a decrease in heat durability. The use of an antioxidant and/or an ultraviolet absorber allows the flexible polyurethane foam to have higher discoloration resistance and quality.

## Description

### Field of the Invention

The present invention relates to flexible polyurethane foams inhibited from discoloring and particularly relates to a flexible polyurethane foam, inhibited from discoloring, useful in manufacturing apparel pads such as brassiere pads, shoulder pads, and hanger pads; sanitary goods such as paper diapers and sanitary napkins; bedclothes; medical goods; and various sundries.

### Background of the Invention

Flexible polyurethane foam has good cushion properties and a soft, comfortable texture and does not sag like cotton after long-term or repeated use. Hence, flexible polyurethane foam has been widely used to manufacture apparel pads such as brassiere pads, shoulder pads, and hanger pads; sanitary goods such as paper diapers and sanitary napkins; bedclothes; medical goods; and various sundries.

Conventional flexible polyurethane foams contain BHT (dibutyl cresol), which is contained in a polyol component used for the production and serves as an antioxidant, and therefore have a problem that BHT causes the discoloration (yellow discoloration) of these foams. If a polyurethane composition containing BHT is foamed, BHT still remains in the resulting foam. Remaining BHT reacts with nitrogen oxides (NOₓ) in air to cause the yellow discoloration of the foam. The conventional flexible polyurethane foams themselves are yellowed due to NOₓ in some cases.

The conventional flexible polyurethane foams are also yellowed due to ultraviolet rays. This is probably because such ultraviolet rays cause the quinoidation of benzene rings contained in polyurethane compositions.

The yellow discoloration of the conventional flexible polyurethane foams and color migration (to cause cloths in contact with the yellowed foams to be stained) are serious problems for the conventional flexible polyurethane foams used to manufacture commodities such as clothes, bedclothes, medical goods, and sundries.

Since NOₓ is present in air and cannot be completely removed, it is essential to prevent discoloration and color migration caused by NOₓ.

In order to prevent the discoloration of conventional foams, it is disclosed that a polyurethane composition contains a specific antioxidant and/or ultraviolet absorber (Japanese Unexamined Patent Application Publication No. 11-323126).

It is also disclosed that an aliphatic isocyanate or an alicyclic isocyanate is used instead of an aromatic isocyanate having a benzene ring that is a cause of discoloration due to ultraviolet rays (Japanese Unexamined Patent Application Publication No. 10-36543).

The specific antioxidant or ultraviolet absorber disclosed in Japanese Unexamined Patent Application Publication No. 11-323126 is extremely expensive; hence, the use thereof seriously increases raw material cost. Furthermore, it is difficult to control reaction if a large amount of the specific antioxidant and/or ultraviolet absorber is used.

A flexible polyurethane foam produced from the aliphatic or alicyclic isocyanate, used instead of the aromatic isocyanate, has high discoloration resistance. However, this foam is expensive, has low heat durability, and is readily deteriorated by a detergent solution; hence, this foam is unsuitable for uses such as clothes and bedclothes.

### Summary of the Invention

It is an object of the present invention to provide a flexible polyurethane foam, inhibited from discoloring, having high detergent resistance and heat durability.

A flexible polyurethane foam, inhibited from discoloring, according to the present invention is produced by using following characteristic polyol component and an isocyanate component. The polyol component contains two or more polyols with different molecular weights. The difference in molecular weight between one of the polyols that has the highest molecular weight and another one of the polyols that has the lowest molecular weight is 500 or more.

### Description of the Preferred Embodiment

A flexible polyurethane foam, inhibited from discoloring, according to an embodiment of the present invention will now be described in detail.

In the flexible polyurethane foam in this invention, a polyurethane composition contains a polyol component containing two or more polyols with different molecular weights. The difference in molecular weight between one of the polyols that has the highest molecular weight and one of the polyols that has the lowest molecular weight is 500 or more. If the molecular weight difference is less than 500, the use of the polyols does not lead to an improvement in discoloration resistance. The molecular weight difference is 500 or more, preferably 2000 or more, and more preferably 3000 or more. An extreme increase in the molecular weight difference leads to an extreme increase in the molecular weight of the high-molecular-weight polyol or an extreme decrease in the molecular weight of the low-molecular-weight polyol and is unsuitable for practical use. Hence, the molecular weight difference is preferably 9600 or less, more preferably 7500 or less, and further more preferably 7000 or less.

Since the polyol component contains the high- and low-molecular-weight polyols, the flexible polyurethane foam has high discoloration resistance without expensive antioxidant, ultraviolet absorber and/or using any aliphatic or alicyclic isocyanate which has low detergent resistance and heat durability.

Although it is not clear why the use of two or more types of polyols having different molecular weights enhances discoloration resistance, the change in the molecular structure and/or arrangement of urethane probably enhances discoloration resistance.

The polyol component preferably contains the two or more polyols and may three or more polyols having different molecular weights. If the polyol component contains such three or more polyols, the difference in molecular weight between one of these polyols that has the highest molecular weight and another one of these polyols that has the lowest molecular weight is preferably 500 or more.

The molecular weight of each polyol is not particularly limited except that the molecular weight difference between the highest-molecular-weight polyol and the lowest-molecular-weight polyol is 500 or more. In usual, the high-molecular-weight polyol preferably is 2000 to 10000 and more preferably 3000 to 8000 and the low-molecular-weight polyol preferably is 80 to 9500 and more preferably 400 to 1000.

The content of the high-molecular-weight polyol in the polyol component is preferably 30 to 99.5 weight percent and more preferably 50 to 97 weight percent, the content of the low-molecular-weight polyol in the polyol component is preferably 0.5 to 70 weight percent and more preferably 3 to 50 weight percent, and the ratio of the high-molecular-weight polyol to the low-molecular-weight polyol preferably ranges from 1 : 0.03 to 1 : 1 (weight basis). This is because an advantage obtained by using the high- and low-molecular-weight polyols in combination is insufficient when the low-molecular-weight polyol content is extremely small compared with the high-molecular-weight polyol content.

The type of the polyols is not particularly limited. Examples of the polyols include polyether polyols and polyester polyols used to produce ordinary flexible polyurethane foams. In usual, the polyols used preferably have an OH number of 20 to 1500. In particular, the high-molecular-weight polyol preferably has an OH number of 20 to 60 and the low-molecular-weight polyol preferably has an OH number of 100 to 1500.

The flexible polyurethane foam according to the present invention can be produced from an ordinary polyurethane composition below except that the polyol component contains the two or more polyols with different molecular weights. The flexible polyurethane foam can be produced by an ordinary method. The polyurethane composition preferably has an NCO index of 90 to 120.

### (Polyurethane Composition (parts by weight))

Polyol Component: 100
Isocyanate Component: 90 to 120 (NCO Index)
Catalyst: 0.01 to 2.0
Foaming Agent: 1.0 to 25.0
Foam Stabilizer: 0.1 to 3.0

The isocyanate component contains an organic polyisocyanate having two or more isocyanate groups. Examples of such an organic polyisocyanate include, but are not limited to, aliphatic polyisocyanates, aromatic polyisocyanates, and modifications of the aliphatic and aromatic polyisocyanates. Examples of the aliphatic polyisocyanates include hexamethylene diisocyanate, isophorone diisocyanate, dicyclohexylmethane diisocyanate, and methylcyclohexane diisocyanate. Examples of the aromatic polyisocyanates include tolylene diisocyanate, diphenylmethane diisocyanate, and polymeric diphenylmethane diisocyanate. Examples of modifications of these polyisocyanates include modified carbodiimides and modified prepolymers. In the present invention, the aromatic polyisocyanate or a modification of the aromatic polyisocyanate is preferably used and in particular, tolylene diisocyanate or diphenylmethane diisocyanate is preferably used.

Any foaming agent used to produce polyurethane foams can be used. Examples of the foaming agent include inert solvents, such as methylene chloride, liquefied carbon dioxide, and chlorofluorocarbons including trichlorofluoromethane and dichlorofluoromethane, having a low boiling point; reactive compounds, such as water, acid amides, and nitro alkanes, generating gas; and pyrolytic compounds, such as sodium bicarbonate and ammonium carbonate, generating gas. Among those, methylene chloride or water is preferably used.

Examples of the foam stabilizer include silicone oil.

Any catalyst used to produce ordinary urethane foams can be used. Examples of the catalyst include tin-containing catalysts such as dibutyl tin laurate and stannous octoate and tertiary amines such as triethylamine and tetramethylhexanemethylenediamine.

In the present invention, a surfactant, a flame retardant, and/or an additive may be used in combination with the polyurethane composition as required. Examples of the surfactant include silicone-containing surfactants. Examples of the flame retardant include known flame retardants such as tris(2-chloroethyl) phosphate and tris(2,3-dibromopropyl) phosphate, organic particles such as urea or thiourea, and inorganic particles such as an metal oxide or antimony oxide.

Examples of the additive include a pigment powder, a dye powder, a talc powder, a graphite powder, short glass fibers, inorganic bulk fillers, and organic solvents.

Even if the isocyanate component contains no aliphatic or alicyclic isocyanate but the aromatic isocyanate and the flexible polyurethane foam contains no antioxidant or ultraviolet absorber, the flexible polyurethane foam has high discoloration resistance. That is, the difference in YI value between the untreated flexible polyurethane foam and the flexible polyurethane foam treated by a color fastness test method, specified in JIS L 0855 (1998), using NOₓ is 70 or less.

It should be construed that any antioxidant or ultraviolet absorber is not excluded from the present invention. In the present invention, at least one of an antioxidant and an ultraviolet absorber may be used in combination with the polyurethane composition such that the flexible polyurethane foam has higher discoloration resistance. These agents are expensive as described above. In the present invention, since the flexible polyurethane foam has sufficiently high discoloration resistance due to the use of the two or more polyols, the flexible polyurethane foam need not substantially contain the antioxidant and the ultraviolet absorber. In particular, the flexible polyurethane foam need not substantially contain any phenolic antioxidant, benzotriazole ultraviolet absorber, or phosphate antioxidant.

In the present invention, high discoloration resistance can be achieved without using any antioxidant or ultraviolet absorber. However, the antioxidant and/or the ultraviolet absorber may be used. The use of the antioxidant and/or the ultraviolet absorber allows the flexible polyurethane foam to have higher discoloration resistance. Therefore, a phenolic antioxidant, a benzotriazole ultraviolet absorber, or a phosphate antioxidant may be used depending on the level of required discoloration resistance.

The flexible polyurethane foam preferably has a density of about 12 to 80 kg/m³.

According to the present invention, the flexible polyurethane foam having high discoloration resistance and high detergent resistance and heat durability can be produced at low cost under mild reaction conditions.

The flexible polyurethane foam of the present invention is useful in manufacturing apparel pads such as brassiere pads; sanitary goods such as paper diapers and sanitary napkins; bedclothes; medical goods; and various sundries. Commercially valuable high-quality products having high discoloration resistance can be manufactured at low cost in the present invention.

### Examples

The present invention will now be further described in detail with reference to examples and comparative examples.

### Examples 1 to 4 and Comparative Examples 1 to 3

Flexible polyurethane foams with a density of about 25 kg/cm³ were produced from polyurethane compositions shown in Table 1 at 25°C by an ordinary method.

Discoloration ability against NOₓ is evaluated in JIS L 0855 (1998). The untreated or treated flexible polyurethane foams were measured for YI value with the instrument "ZE 2000" available from Nippon Denshoku Industries Co., Ltd.. Table 1 summarizes the test results. In the discoloration test, an increase of ΔYI, which is difference in YI value between each untreated flexible polyurethane foam and the treated one leads to an increase in discoloration. The ΔYI is preferably 40 or less, more preferably 30 or less, and further more preferably 25 or less.

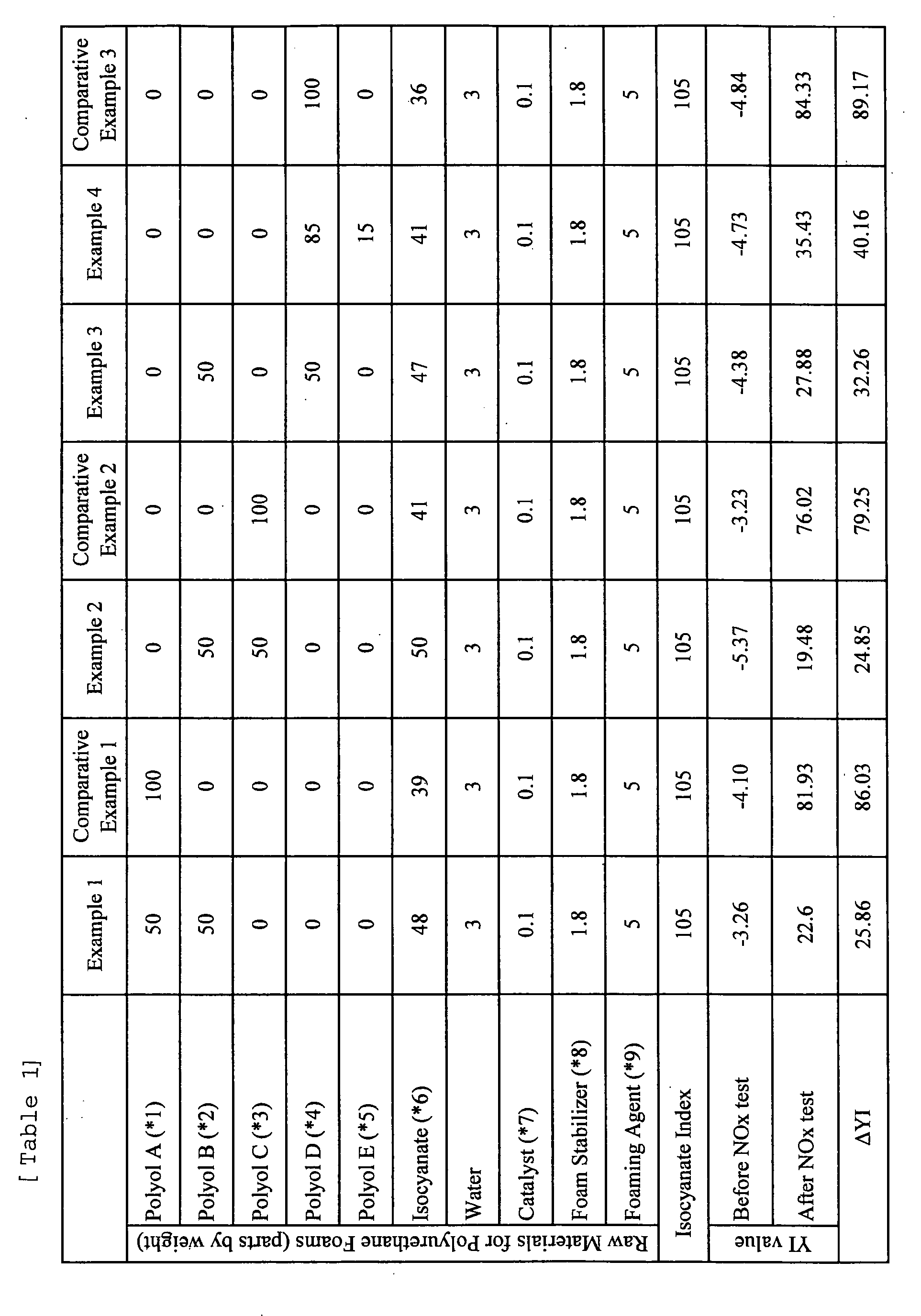

Symbols *1 to *9 in Table 1 are as described below.
* 1: Polyether polyol "EXCENOL 4030", available from Asahi Glass Urethane Co., Ltd., having an OH value of 42 and a molecular weight of 4000
* 2: Polyether polyol "Actcol 32-160", available from Mitsui Takeda Chemical Co., Ltd., having an OH value of 160 and a molecular weight of 1000
* 3: Polyether polyol "Sannix GS-3000", available from Sanyo Chemical Industries, Ltd., having an OH value of 56 and a molecular weight of 3000
* 4: Polyether polyol "Actcol FC-24", available from Mitsui Takeda Chemical Co., Ltd., having an OH value of 25 and a molecular weight of 7000
* 5: Polyether polyol "Actcol G-250", available from Mitsui Takeda Chemical Co., Ltd., having an OH value of 243 and a molecular weight of 700
* 6: Tolylene diisocyanate "TDI 80" available from Takeda Pharmaceutical Co., Ltd.
* 7: 6-dimethylamino-1-hexanol "Kaolizer No. 25" available from Kao Corporation
* 8: Silicone surfactant "F-242TB" available from Shin-Etsu Chemical Co., Ltd.
* 9: Methylene chloride available from Shin-Etsu Chemical Co., Ltd.

As is clear from Table 1, according to the present invention, the ΔYI of the polyurethane foams produced using two types of polyols having different molecular weights are about one third or less of those of the polyurethane foams produced using one type of polyol and those polyurethane foams have high discoloration resistance although those polyurethane foams contain no antioxidant or ultraviolet absorber and have been produced without using any aliphatic or aromatic isocyanate.

## Claims

1. A flexible polyurethane foam inhibited from discoloring produced by foaming a polyurethane composition containing a polyol component and an isocyanate component, wherein the polyol component contains two or more polyols with different molecular weights and the difference in molecular weight between one of the polyols that has the highest molecular weight and another one of the polyols that has the lowest molecular weight is 500 or more.

2. The flexible polyurethane foam inhibited from discoloring according to Claim 1, wherein the molecular weight difference therebetween is 500 to 9600.

3. The flexible polyurethane foam inhibited from discoloring according to Claim 2, wherein the molecular weight difference therebetween is 2000 to 7500.

4. The flexible polyurethane foam inhibited from discoloring according to Claim 3, wherein the molecular weight difference therebetween is 3000 to 7000.

5. The flexible polyurethane foam inhibited from discoloring according to Claim 1, wherein the high-molecular-weight polyol has a molecular weight of 2000 to 10000 and the low-molecular-weight polyol has a molecular weight of 80 to 9500.

6. The flexible polyurethane foam inhibited from discoloring according to Claim 5, wherein the high-molecular-weight polyol has a molecular weight of 3000 to 8000 and the low-molecular-weight polyol has a molecular weight of 400 to 1000.

7. The flexible polyurethane foam inhibited from discoloring according to Claim 1, wherein the content of the high-molecular-weight polyol in the polyol component is 30 to 99.5 weight percent and the content of the low-molecular-weight polyol in the polyol component is 0.5 to 70 weight percent.

8. The flexible polyurethane foam inhibited from discoloring according to Claim 7, wherein the content of the high-molecular-weight polyol in the polyol component is 50 to 97 weight percent and the content of the low-molecular-weight polyol in the polyol component is 3 to 50 weight percent.

9. The flexible polyurethane foam inhibited from discoloring according to Claim 1, wherein the ratio of the high-molecular-weight polyol to the low-molecular-weight polyol ranges from 1 : 0.03 to 1 : 1 (weight basis).

10. The flexible polyurethane foam inhibited from discoloring according to Claim 1, wherein the high-molecular-weight polyol has an OH number of 20 to 60 and the low-molecular-weight polyol has an OH number of 100 to 1500.

11. The flexible polyurethane foam inhibited from discoloring according to Claim 1, wherein the isocyanate component contains an aromatic isocyanate.

12. The flexible polyurethane foam inhibited from discoloring according to Claim 1, wherein the difference of YI value before and after discoloration test method, specified in JIS L 0855 (1998), using NOₓ is 70 or less.
